# FASCICULE DE BREVET EUROPEEN

(11) **EP 3 651 623 B1**
(45) Date de publication et mention de la délivrance du brevet: **08.09.2021**
(21) Numéro de dépôt: 18752813.8
(22) Date de dépôt: 05.07.2018
(51) Int. Cl.: A47J 36/10, A47J 43/07

(54) **APPAREIL DE PREPARATION CULINAIRE**
VORRICHTUNG ZUR LEBENSMITTELZUBEREITUNG
FOOD-PREPARATION DEVICE

(30) Priorité: 12.07.2017 FR 1756621
(43) Date de publication de la demande: 20.05.2020
(73) Titulaire: SEB S.A., 69130 Ecully (FR)
(72) Inventeur: DESHAYES, Jean-Louis, 53700 Averton (FR); MORIN, Yoann, 53470 Martigne-sur-Mayenne (FR); MAUNOURY, Damien, 53470 Chalons du Maine (FR)
(74) Mandataire: SEB Développement
(86) Numéro de dépôt international: PCT/FR2018/051681
(87) Numéro de publication internationale: WO 2019/012208

(56) Documents cités:
- WO-A1-2013/124723
- US-A- 4 335 860
- US-B1- 6 340 124

## Description

La présente invention concerne de manière générale les appareils de préparation culinaire, et en particulier les appareils de préparation culinaire agencés pour chauffer et travailler automatiquement des aliments à préparer préalablement placés dans une cuve de travail par un utilisateur. Typiquement, l'invention concerne un robot ménager comprenant une cuve dans laquelle l'utilisateur place des ingrédients, pour ensuite la fermer avec un couvercle, et le robot ménager prépare ensuite automatiquement un plat prêt à être consommé, en chauffant et travaillant les ingrédients de la cuve de travail.

Il est connu dans l'art antérieur des robots ménagers, tel que celui présenté dans le document WO2014/026866 A1. En contrepartie, l'appareil de préparation culinaire divulgué dans ce document est complexe car il comporte un couvercle qui peut être bloqué sur la cuve de travail par des arbres longitudinaux ancrés dans un retour vertical de l'appareil de préparation culinaire. En conséquence, il faut prévoir un châssis complexe et robuste (qui forme donc un col de cygne), ce qui est couteux, et volumineux. En conséquence, l'accès à la cuve de travail est limité par ces organes latéraux de blocage, et l'ergonomie d'utilisation s'en trouve limitée. Enfin, la commande des organes de blocage nécessite le fonctionnement d'un motoréducteur, ce qui est long et peut provoquer une attente de la part de l'utilisateur. Le document US4335860 montre un appareil de préparation culinaire comprenant les caractéristiques du préambule de la revendication 1.

Un but de la présente invention est de répondre aux inconvénients de l'art antérieur mentionnés ci-dessus et en particulier, tout d'abord, de proposer un appareil de préparation culinaire (un robot ménager) avec une structure simple et facile à utiliser. De plus, l'invention propose un procédé de commande de l'appareil de préparation culinaire qui limite les temps d'attente, tout en garantissant la sécurité de l'utilisateur, même si des aliments chauds se trouvent dans la cuve.

Pour cela un premier aspect de l'invention concerne un appareil de préparation culinaire comprenant :
- un boîtier,
- une cuve montée sur le boîtier et agencée pour recevoir des aliments à préparer,
- au moins un organe mobile de travail disposé dans la cuve et agencé pour travailler les aliments reçus dans la cuve,
- un moteur disposé dans le boîtier et agencé pour mettre en mouvement l'organe mobile de travail,
- un couvercle amovible conférant à la cuve un état fermé dans lequel la cuve est fermée par le couvercle,
- des moyens de verrouillage du couvercle sur la cuve,
- le couvercle étant agencé pour être déplacé lorsque la cuve est dans son état fermé entre :
   - une position déverrouillée sur la cuve, dans laquelle le couvercle est dégagé des moyens de verrouillage, et
   - une position verrouillée sur la cuve, dans laquelle le couvercle coopère avec les moyens de verrouillage,
   caractérisé :
   en ce que l'appareil de préparation culinaire comprend des moyens de sécurisation du verrouillage du couvercle, lesdits moyens de sécurisation du verrouillage comportant :
   - au moins un organe de blocage mobile entre une première position dans laquelle le mouvement du couvercle depuis la position verrouillée vers la position déverrouillée est autorisé, et une deuxième position dans laquelle l'organe de blocage entrave le mouvement du couvercle depuis la position verrouillée vers la position déverrouillée,
   - un motoréducteur pour déplacer l'organe de blocage entre la première position et la deuxième position.

L'appareil de préparation culinaire selon la mise en œuvre ci-dessus reste simple, puisque la position verrouillée (fermée) du couvercle est sécurisée par un organe de blocage qui empêche tout déplacement relatif entre la cuve et le couvercle, qui soit susceptible d'autoriser un retrait du couvercle. Le couvercle ne peut pas être manœuvré pour ouvrir la cuve, et l'organe de blocage est un organe simple à déplacer, sans effort à exercer sur le couvercle (puisque celui-ci est déjà accouplé et verrouillé avec la cuve). En résumé, lors de l'utilisation, le couvercle est tout d'abord posé sur la cuve par l'utilisateur pour la fermer (le couvercle est en position déverrouillée), puis, cuve toujours fermée, le couvercle est déplacé par l'utilisateur pour aller dans la position verrouillée, et il peut alors être bloqué dans cette position par les moyens de sécurisation du verrouillage (l'organe de blocage).

Avantageusement, les moyens de verrouillage du couvercle sur la cuve sont du type à baïonnette. De tels moyens de verrouillage sont pratiques et permettent une action de verrouillage simultanément au déplacement du couvercle vers la position verrouillée. Il est à noter que les moyens de verrouillage sont distincts des moyens de sécurisation du verrouillage. En particulier, le couvercle est déplacé de sa position déverrouillée vers la position verrouillée par l'utilisateur, pour y être verrouillé par un organe de verrouillage (une baïonnette par exemple). Ensuite seulement l'organe de blocage des moyens de sécurisation du verrouillage coopère ou s'engage avec le couvercle pour le bloquer. En d'autres termes, l'organe de blocage ne fait pas partie des moyens de verrouillage.

Avantageusement, le couvercle est agencé pour être déplacé entre la position déverrouillée et la position verrouillée selon un mouvement de rotation par rapport à la cuve. En d'autres termes, le couvercle est monté sur la cuve selon une liaison pivot.

Avantageusement, la cuve est montée amovible sur le boîtier et le boîtier comprend une surface d'appui agencée pour recevoir la cuve.

Avantageusement, la cuve comporte une poignée et l'organe de blocage s'étend hors de la poignée lorsque l'organe de blocage occupe la deuxième position. En particulier, l'organe de blocage n'est en protubérance par rapport à la poignée que lorsque l'organe de blocage occupe la deuxième position. Dans la première position, l'organe de blocage est avantageusement effacé par rapport à la poignée, ce qui permet au couvercle de passer simplement de la position déverrouillée à la position verrouillée.

Selon un mode de réalisation avantageux, l'organe de blocage est porté par une tige agencée pour être déplacée par le motoréducteur selon un mouvement de translation entre la première position et la deuxième position, de préférence selon une liaison glissière. Autrement dit, la tige est coulissante. En particulier, le mouvement de la tige est sensiblement parallèle à l'axe du mouvement de rotation du couvercle (cet axe peut être aussi un axe de symétrie de la cuve, et il est vertical, lorsque l'appareil de préparation culinaire repose sur un plan horizontal). En d'autres termes, la tige comporte une portion de blocage formant l'organe de blocage. L'organe de blocage est donc perpendiculaire à une direction tangentielle du mouvement de rotation pour déverrouiller / retirer le couvercle, ce qui procure une sécurisation du verrouillage efficace. En alternative, l'organe de blocage pourrait notamment être monté pivotant par rapport à la cuve ou par rapport au boîtier. Selon un mode de réalisation avantageux, l'organe de blocage est formé par la tige.

Avantageusement alors, le motoréducteur est accouplé à la tige pour déplacer l'organe de blocage entre la première position et la deuxième position. Si désiré, le motoréducteur peut notamment être accouplé à la tige par l'intermédiaire d'un bras de commande. En alternative un dispositif de transmission peut être agencé entre le motoréducteur et la tige.

Avantageusement encore, la tige est portée par la cuve. La cuve forme donc un sous-ensemble qui embarque la tige.

Avantageusement encore, la tige est associée à des moyens de rappel élastiques agencés pour déplacer la tige vers la première position depuis la deuxième position. L'appareil de préparation culinaire comprend donc des moyens de rappel élastiques, tels qu'un ressort pour assurer ou faciliter le retour en première position de la tige.

Avantageusement encore, la cuve porte un capot latéral s'étendant de la surface d'appui à une partie supérieure de la cuve et la tige est logée principalement entre la cuve et le capot latéral.

Avantageusement encore, la cuve comporte une poignée et la portion de blocage de la tige s'étend hors de la poignée lorsque la tige occupe la deuxième position. En particulier, la tige n'est en protubérance par rapport à la poignée que lorsqu'elle est en deuxième position. En première position, la tige est effacée par rapport à la poignée, ce qui permet au couvercle de passer simplement de la position déverrouillée à la position verrouillée.

Alternativement, la tige est montée en liaison glissière sur le boîtier.

Avantageusement, l'organe de blocage est un index mâle, et le couvercle comprend une forme femelle agencée pour recevoir l'index mâle.

Avantageusement le motoréducteur est agencé dans le boîtier. Avantageusement encore, le motoréducteur comprend un bras de commande. Avantageusement alors, le bras de commande comprend au moins une butée de fin de course prévue pour venir en butée avec le boîtier afin de définir la première position de l'organe de blocage et/ou la deuxième position de l'organe de blocage. Si désiré le bras de commande peut comprendre une première butée de fin de course prévue pour venir en butée avec le boîtier afin de définir la première position de l'organe de blocage, et une deuxième butée de fin de course prévue pour venir en butée avec le boîtier afin de définir la deuxième position de l'organe de blocage.

Avantageusement, le motoréducteur est agencé pour déplacer l'organe de blocage de la deuxième position à la première position.

Avantageusement, l'organe mobile de travail est un mélangeur, ou un malaxeur, ou un batteur, ou un organe de coupe, ou un hachoir, ou comprend au moins une pale de mélange, ou comprend au moins un couteau. Typiquement, un tel organe mobile de travail est mobile en rotation à l'intérieur de la cuve.

Avantageusement, l'appareil de préparation culinaire comprend des moyens de détection de position et/ou présence de la cuve et/ou du couvercle. Cela permet de garantir que la sécurisation du verrouillage du couvercle ne sera lancée que si l'appareil de préparation culinaire a reconnu que la cuve et le couvercle sont bien présents et accouplés entre eux.

Avantageusement, l'appareil de préparation culinaire comprend des moyens de chauffage agencés pour fournir une chaleur de cuisson aux aliments reçus dans la cuve.

Avantageusement, le motoréducteur est agencé dans le boîtier.

Avantageusement, l'organe mobile de travail est amovible.

Un deuxième aspect de l'invention concerne un procédé de commande d'un appareil de préparation culinaire comprenant :
- un boîtier,
- une cuve montée sur le boîtier et agencée pour recevoir des aliments à préparer,
- au moins un organe mobile de travail disposé dans la cuve et agencé pour travailler les aliments reçus dans la cuve,

- un moteur disposé dans le boîtier et agencé pour mettre en mouvement l'organe mobile de travail selon plusieurs vitesses de travail,
- un couvercle amovible conférant à la cuve un état fermé dans lequel la cuve est fermée par le couvercle,
- des moyens de verrouillage du couvercle sur la cuve,
- le couvercle étant agencé pour être déplacé lorsque la cuve est dans son état fermé entre :
   - une position déverrouillée sur la cuve, dans laquelle le couvercle est dégagé des moyens de verrouillage, et
   - une position verrouillée sur la cuve, dans laquelle le couvercle coopère avec les moyens de verrouillage,
- des moyens de chauffage agencés pour fournir une chaleur de cuisson aux aliments reçus dans la cuve,
- des moyens de sécurisation du verrouillage du couvercle en position verrouillée,
   le procédé de commande comprenant les étapes consistant à :
- actionner automatiquement les moyens de sécurisation du verrouillage lors d'un démarrage de l'appareil de préparation culinaire, de sorte à bloquer le couvercle en position verrouillée,
- actionner les moyens de sécurisation du verrouillage de sorte à débloquer le couvercle :
   - simultanément à un arrêt de l'appareil de préparation culinaire, si une température mesurée de la cuve ou des aliments à préparer est inférieure à une température prédéterminée ou si une température de consigne utilisée avant l'arrêt de l'appareil de préparation culinaire est inférieure à une température prédéterminée ou si la vitesse de travail utilisée avant l'arrêt de l'appareil de préparation culinaire est inférieure à une vitesse prédéterminée,
   - à l'issue d'une temporisation de repos comptée à partir d'un arrêt de l'appareil de préparation culinaire, si une température de la cuve ou des aliments à préparer est supérieure à la température prédéterminée, et si la vitesse de travail utilisée avant l'arrêt de l'appareil de préparation culinaire est supérieure à une vitesse prédéterminée.

Le procédé ci-dessus, avec la levée de la sécurisation du verrouillage du couvercle effectuée seulement après la temporisation de repos si les aliments sont chauds et ont été fortement agités, permet de sécuriser l'usage. En effet, l'enceinte reste fermée et le couvercle bloqué en position verrouillée s'il existe un risque de débordement ou d'ébullition, après un chauffage / agitation importants. Le reste du temps, le couvercle peut être retiré immédiatement après l'arrêt, ce qui limite les temps d'attente inutiles (car en dessous de la température prédéterminée ou de la vitesse prédéterminée, il n'y a pas de risque de débordement ou d'ébullition intempestifs).

Avantageusement, la température de la cuve ou des aliments à préparer, est mesurée ou estimée avant ou simultanément à la fin de la préparation des aliments. En d'autres termes, la température de la cuve ou des aliments à préparer est estimée ou mesurée au moins au cours des derniers instants de préparation (dans la dernière minute ou dans les dernières trente secondes ou lors de la dernière étape du programme de préparation culinaire) pour savoir s'il faut sécuriser ou non le verrouillage du couvercle après l'arrêt de l'organe mobile de travail et/ou des moyens de chauffe. L'appareil peut comprendre une sonde de température, ou alors prendre en compte la consigne de température utilisée lors du programme de préparation culinaire.

En ce qui concerne la vitesse de travail, l'appareil peut la mesurer ou l'estimer avant ou simultanément à la fin de la préparation des aliments. En d'autres termes, la vitesse de travail est estimée ou mesurée au moins au cours des derniers instants de préparation (dans la dernière minute ou dans les dernières trente secondes ou lors de la dernière étape du programme de préparation culinaire) pour savoir s'il faut sécuriser ou non le verrouillage du couvercle après l'arrêt de l'organe mobile de travail et/ou des moyens de chauffe. L'appareil peut comprendre un encodeur, ou alors prendre en compte la consigne de vitesse de travail utilisée lors du programme de préparation culinaire. Toutefois, la température de la cuve ou des aliments à préparer et la vitesse de travail ne sont pas nécessairement estimées ou mesurées au même instant, ni simultanément.

Une variante du deuxième aspect de l'invention concerne un procédé de commande d'un appareil de préparation culinaire comprenant :
- un boîtier,
- une cuve montée sur le boîtier et agencée pour recevoir des aliments à préparer,
- au moins un organe mobile de travail disposé dans la cuve et agencé pour travailler les aliments reçus dans la cuve,
- un moteur disposé dans le boîtier et agencé pour mettre en mouvement l'organe mobile de travail selon plusieurs vitesses de travail,
- un couvercle amovible conférant à la cuve un état fermé dans lequel la cuve est fermée par le couvercle,
- des moyens de verrouillage du couvercle sur la cuve,
- le couvercle étant agencé pour être déplacé lorsque la cuve est dans son état fermé entre :
   - une position déverrouillée sur la cuve, dans laquelle le couvercle est dégagé des moyens de verrouillage, et
   - une position verrouillée sur la cuve, dans laquelle le couvercle coopère avec les moyens de verrouillage,
   - des moyens de chauffage agencés pour fournir une chaleur de cuisson aux aliments reçus dans la cuve,
   - des moyens de sécurisation du verrouillage du couvercle en position verrouillée,
      le procédé de commande comprenant les étapes consistant à :
   - actionner de manière conditionnelle les moyens de sécurisation du verrouillage lors d'un démarrage de l'appareil de préparation culinaire, ou après le démarrage de l'appareil de préparation culinaire, de sorte à bloquer le couvercle en position verrouillée, seulement si une température mesurée de la cuve ou des aliments à préparer est supérieure à une température prédéterminée ou si une température de consigne utilisée avant l'arrêt de l'appareil de préparation culinaire est supérieure à une température prédéterminée, et si la vitesse de travail utilisée est supérieure à une vitesse prédéterminée,
   - actionner les moyens de sécurisation du verrouillage de sorte à débloquer le couvercle à l'issue d'une temporisation de repos comptée à partir d'un arrêt de l'appareil de préparation culinaire, si les moyens de sécurisation du verrouillage ont été précédemment actionnés de sorte à bloquer le couvercle en position verrouillée.

Le procédé selon la mise en œuvre ci-dessus sécurise l'usage : la sécurisation de la position verrouillée du couvercle n'est activée que si les aliments seront fortement chauffés et agités lors de la préparation à venir, et il ne sera alors débloqué qu'à l'issue de la temporisation de repos. Dans tous les autres cas, le couvercle n'est pas bloqué en position verrouillée.

Avantageusement, la température de la cuve ou des aliments à préparer est mesurée ou estimée avant ou simultanément à la fin de la préparation des aliments. En d'autres termes, la température de la cuve ou des aliments à préparer est estimée ou mesurée au moins au cours des derniers instants de préparation (dans la dernière minute ou dans les dernières trente secondes ou lors de la dernière étape du programme de préparation culinaire) pour savoir s'il faut sécuriser ou non le verrouillage du couvercle. L'appareil peut comprendre une sonde de température, ou alors prendre en compte la consigne de température utilisée lors du programme de préparation culinaire. On peut aussi prévoir de lancer le verrouillage conditionnel sur la base de la température prévue dans un cycle à venir, avant même que la cuve ou les aliments ne soient à cette température.

En ce qui concerne la vitesse de travail, l'appareil peut la mesurer ou l'estimer avant ou simultanément à la fin de la préparation des aliments. En d'autres termes, la vitesse de travail est estimée ou mesurée au moins au cours des derniers instants de préparation (dans la dernière minute ou dans les dernières trente secondes ou lors de la dernière étape du programme de préparation culinaire) pour savoir s'il faut sécuriser ou non le verrouillage du couvercle. L'appareil peut comprendre un encodeur, ou alors prendre en compte la consigne de vitesse de travail utilisée lors du programme de préparation culinaire. On peut aussi prévoir de lancer le verrouillage conditionnel sur la base de la vitesse de travail prévue dans un cycle à venir, avant même que l'organe mobile de travail ne soit mis en rotation. Toutefois, la température de la cuve ou des aliments à préparer et la vitesse de travail ne sont pas nécessairement estimées ou mesurées au même instant, ni simultanément.

Avantageusement, la durée de la temporisation de repos est supérieure ou égale à 5 secondes, et préférentiellement supérieure ou égale à 10 secondes.

Avantageusement, la température prédéterminée est inférieure ou égale à 60°C et de préférence inférieure ou égale à 50°C, et la vitesse prédéterminée correspond à une vitesse de rotation de l'organe mobile de travail inférieure ou égale à 250 tours/min, et de préférence inférieure ou égale à 160 tours/min.

Avantageusement, la vitesse de travail est une vitesse de consigne à imposer à l'organe mobile de travail lors du programme de fonctionnement préétabli, ou la vitesse de travail est une vitesse mesurée de l'organe mobile de travail, à l'aide d'un encodeur par exemple.

Avantageusement, l'arrêt de l'appareil de préparation culinaire est un arrêt du mouvement de l'organe mobile de travail et/ou un arrêt du chauffage de la cuve.

Avantageusement, le procédé de commande comprend, après le démarrage de l'appareil de préparation culinaire, au moins une étape consistant à chauffer les aliments à travailler et au moins une étape consistant à travailler les aliments à préparer avec l'organe mobile de travail.

Avantageusement, le procédé de commande comprend, après le démarrage de l'appareil de préparation culinaire, au moins une étape consistant à mélanger, ou à malaxer, ou à battre, ou à couper, ou à hacher les aliments à préparer.

Typiquement, pour un appareil de préparation culinaire tel que celui objet de l'invention, une vitesse de rotation de l'organe mobile de travail est comprise dans une gamme allant de 0 à 300 tours/min (ou tours/minute, ou min⁻¹) par exemple, et préférentiellement entre 0 et 200 tours/min. Avantageusement, la vitesse prédéterminée est par exemple une vitesse qui est dans la plage de [70%-100%] et préférentiellement [80%-100%] de la vitesse maximum de la gamme totale de vitesse indiquée ci dessus. En d'autres termes, on sécurise le verrouillage du couvercle pour toute vitesse supérieure par exemple à 160 tours/min et préférentiellement pour toute vitesse supérieure à 250 tours/min, si la température est supérieure à 50°C ou 60°C, ce qui permet d'empêcher toute ouverture de l'enceinte de travail si un risque d'ébullition ou de débordement est présent, même après l'arrêt du moteur entraînant l'organe mobile de travail.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue éclatée en perspective d'un appareil de préparation culinaire selon la présente invention comprenant un boîtier, une cuve et un couvercle ;
- la figure 2 représente une section partielle de l'appareil de préparation culinaire illustré sur la figure 1, dans laquelle la cuve n'est pas représentée, pour montrer une tige faisant partie de moyens de sécurisation d'un verrouillage du couvercle de l'appareil de préparation culinaire, ladite tige occupant une première position ;
- la figure 3 représente la section partielle de la figure 2, avec ladite tige occupant une deuxième position;
- les figures 4a et 4b représentent une vue en perspective d'un motoréducteur faisant partie de moyens de sécurisation;
- la figure 5 représente une vue en perspective d'une partie de l'appareil de préparation culinaire.

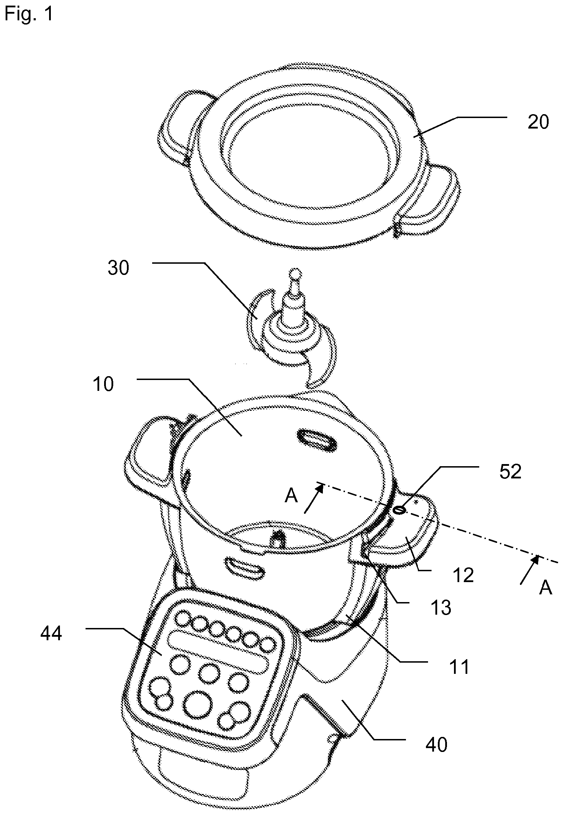

La figure 1 représente un appareil de préparation culinaire avec un boîtier 40, recevant de manière amovible une cuve 10 qui peut contenir un organe mobile de travail 30 et être fermée par un couvercle 20. L'organe mobile de travail 30, ici un outil de découpe, est placé dans la cuve 10, et se trouve alors accouplé avec un moteur situé dans le boîtier 40, pour être entraîné en rotation, une fois la cuve 10 fermée avec le couvercle 20.

La cuve 10 présente deux capots latéraux 11 formant deux extensions latérales opposées qui remontent le long de la cuve 10, et qui se terminent par deux poignées 12 au niveau de la partie supérieure de la cuve 10, et comprenant chacune une fente 13. Le couvercle 20 est prévu pour se monter sur la cuve 10 suivant un mouvement de rotation (une liaison pivot est prévue), afin d'engager une partie mâle du couvercle 20 dans les fentes 13, en passant d'une position déverrouillée vers une position verrouillée dans laquelle le couvercle 20 est en position finale sur l'appareil de préparation culinaire. Ce système de verrouillage est par exemple un verrouillage à baïonnette.

En d'autres termes, le couvercle 20 en position déverrouillée ferme la cuve 10, et peut en être retiré librement, mais ne peut plus se soulever de la cuve 10 une fois qu'il a été déplacé vers la position verrouillée, ce qui procure une sécurité d'utilisation lorsque l'organe mobile de travail 30 est en rotation dans la cuve 10. Les moyens de verrouillage à baïonnette évoqués ci-dessus peuvent être élastiques, c'est-à-dire que l'utilisateur en montant le couvercle fait passer un "cran" au couvercle pour qu'une patte flexible des moyens de verrouillage à baïonnette forme un obstacle à un retour en arrière lors de l'utilisation. Lorsque la préparation est terminée, l'utilisateur en tournant le couvercle 20 en sens inverse déverrouille les moyens de verrouillage à baïonnette en forçant pour passer à nouveau le "cran", et peut retirer le couvercle 20 en finissant de le faire pivoter.

L'appareil de préparation culinaire peut aussi comprendre des moyens de chauffage pour chauffer et/ou cuire des aliments à préparer. Il s'agit typiquement d'une résistance chauffante placée dans le boîtier 40, sur le boîtier 40, sur la cuve 10, ou dans cette dernière.

Typiquement, des aliments à préparer sont placés dans la cuve 10 avec l'organe mobile de travail 30, le couvercle 20 est présenté sur la cuve 10 pour la fermer, puis le couvercle 20 est pivoté pour aller de la position déverrouillée à la position verrouillée, et un programme prédéterminé de préparation est sélectionné par l'utilisateur sur un panneau de commande 44 du boîtier 40. L'appareil de préparation culinaire peut comprendre des moyens de détection (des capteurs de présence) qui indiquent que la cuve 10 est en place, et que le couvercle 20 est bien en position verrouillée, avant de lancer la préparation, en chauffant et/ou travaillant les aliments à préparer.

Lors de cette préparation, une vitesse de rotation de l'organe mobile de travail 30 peut être imposée dans une gamme de vitesse allant de 0 à 300 tours/min (300min⁻¹), par paliers, de manière variable ou constante. Le moteur situé dans le boîtier 40 est avantageusement associé à un réducteur. Les moyens de chauffage peuvent être choisis pour imposer aux aliments à préparer une température allant jusqu'à 130°C par exemple.

En fonction du programme sélectionné, et en particulier lorsqu'un risque de débordement de produit chaud est identifié, il faut pouvoir bloquer le couvercle 20 en position verrouillée, même si le couvercle 20 est déjà verrouillé en position verrouillée par les moyens de verrouillage décrits ci-dessus.

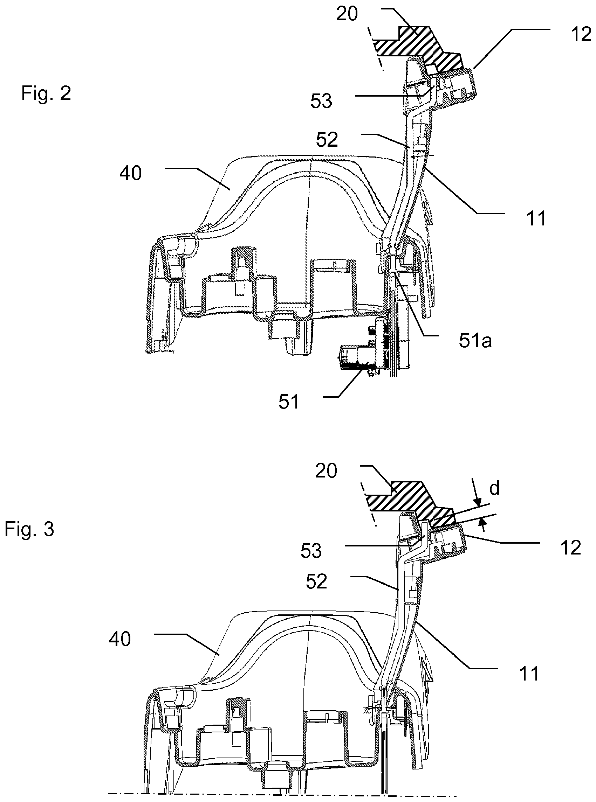

En conséquence, l'appareil de préparation culinaire selon la présente invention comprend des moyens de sécurisation du verrouillage du couvercle 20 en position verrouillée, mis en évidence sur les figures 2 et 3 qui sont une section partielle de l'appareil de préparation culinaire selon l'axe A-A de la figure 1.

Les moyens de sécurisation du verrouillage comprennent notamment une tige 52 logée dans un des capots latéraux 11 de la cuve 10, et un motoréducteur 51 comprenant un bras de commande 51a, afin de faire coulisser la tige 52 par rapport au boîtier 40 et à la cuve 10. Dans le cas présent, la tige 52 est montée en liaison glissière sur la cuve 10. Cependant on peut envisager, à titre d'alternative, de rendre la tige 52 solidaire du boîtier 40.

Sur les figures 1 et 2, la tige 52 affleure la surface supérieure de la poignée 12, elle n'en dépasse pas. La tige 52 est dans une première position dans laquelle le couvercle 20 fermant la cuve 10 peut être librement pivoté par rapport à la cuve 10. Les moyens de sécurisation du verrouillage sont dits "désactivés".

Sur la figure 3, la tige 52 a été déplacée vers le haut par le motoréducteur 51, ce qui la fait dépasser d'une hauteur d par rapport à la poignée 12, pour faire pénétrer la partie extrémale (une portion de blocage ou d'engagement) de la tige 52 formant un organe de blocage 53 dans une forme femelle du couvercle 20, afin de bloquer le seul degré de liberté (rotation) du couvercle 20, qui se trouve donc bloqué dans la position verrouillée. L'utilisateur ne peut pas pivoter le couvercle 20 pour le retirer de la cuve 10 tant que la tige 52 est dans la deuxième position, l'organe de blocage 53 entravant le mouvement du couvercle 20. Les moyens de sécurisation du verrouillage sont dits "activés".

La première position et la deuxième position de la tige 52 formant l'organe de blocage 53 peuvent notamment être définies par une ou plusieurs butées de fin de course du bras de commande 51a du motoréducteur 51, prévues par exemple pour venir en butée dans le boîtier 40. A titre d'alternative, on peut prévoir au moins une butée mécanique entre la tige 52 d'une part, et le boîtier 40 ou la cuve 10 ou l'un des capots latéraux 11, d'autre part, afin de ne pas exercer d'efforts sur le couvercle 20 en position verrouillée. Cependant, si le couvercle 20 est mal verrouillé et le motoréducteur 51 tout de même lancé, la tige 52 arrivera en butée sur le couvercle 20 mal positionné.

Afin de faire retourner la tige 52 en première position, il faut à nouveau commander le motoréducteur 51 pour que le motoréducteur fasse redescendre le bras de commande 51a, et on peut prévoir un ressort de rappel pour faciliter le retour en position de la tige 52.

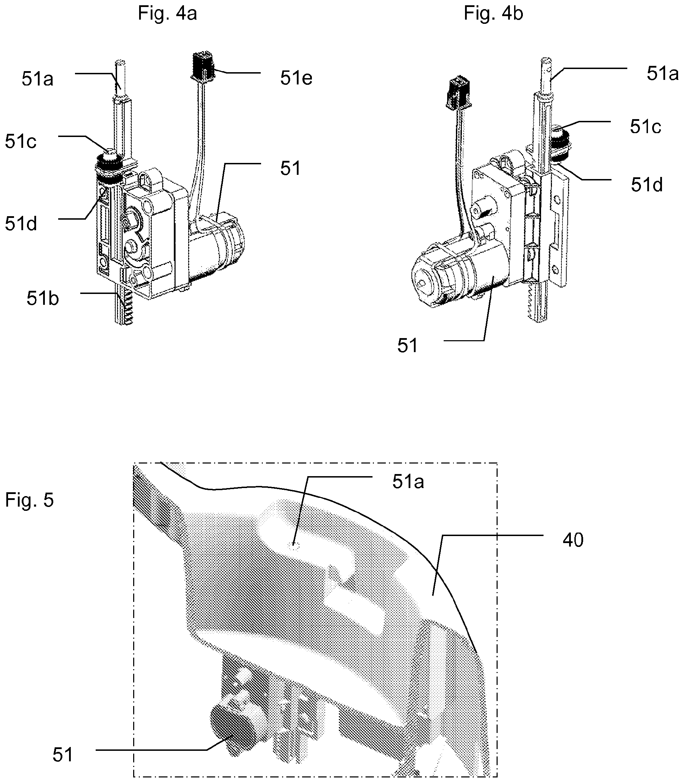

Plus en détail, les figures 4a et 4b représentent une vue selon deux points de vue du motoréducteur 51, qui comprend le bras de commande 51a qui comprend une crémaillère 51b, et un connecteur électrique 51e. Le bras de commande 51a forme une liaison pignon-crémaillère avec le motoréducteur 51, et se trouve guidé en liaison glissière par le boîtier plastique du motoréducteur 51. L'ensemble est alors compact, et le bras de commande 51a embarque deux butées 51c et 51d qui sont chacune agencée pour entrer en butée avec une portion du boîtier 40 pour assurer une butée de fin de course franche pour le système. La butée 51c assure la butée de fin de course haute (tige 52 en deuxième position) et la butée 51d assure la butée de fin de course basse (tige 52 dans sa première position).

La figure 5 représente une vue partielle en perspective d'une partie de l'appareil de préparation culinaire, où on voit le motoréducteur 51 agencé dans le boîtier 40, avec la partie haute du bras de commande 51a qui affleure du boîtier 40. Ainsi, lorsque l'utilisateur accouple la cuve 10 (avec la tige 52 logée dans l'extension latérale 11) sur le boîtier 40, la tige 52 se retrouve face au bras de commande 51a, prête à être poussée vers le haut s'il faut sécuriser le verrouillage du couvercle 20.

Comme mentionné ci-dessus, le blocage en position verrouillée du couvercle 20 n'est effectué que si un risque de débordement de produit chaud est identifié. En particulier, l'appareil de préparation culinaire selon la présente invention peut mettre en œuvre un procédé de commande dans lequel les moyens de sécurisation du verrouillage du couvercle en position verrouillée ne sont commandés que si une vitesse de rotation de l'organe mobile de travail est supérieure à une vitesse prédéterminée, et si la température des aliments à préparer est supérieure à une température prédéterminée.

Selon une première variante de ce procédé, on peut prévoir d'actionner systématiquement les moyens de sécurisation du verrouillage, pour toujours bloquer le couvercle 20 en position verrouillée, et maintenir pendant une temporisation de repos (au moins cinq secondes, et préférentiellement au moins huit ou dix secondes) les moyens de sécurisation du verrouillage activés après l'arrêt, seulement si au cours du cycle de préparation, la vitesse de rotation de l'organe mobile de travail est (ou a été) supérieure à une vitesse prédéterminée, et si la température des aliments à préparer est (ou a été) supérieure à une température prédéterminée. L'utilisateur doit alors attendre la fin de la temporisation de repos avant de pouvoir ouvrir le couvercle 20. Si ces deux conditions n'ont pas été remplies simultanément, la désactivation des moyens de sécurisation du verrouillage est simultanée à l'arrêt de l'appareil de préparation culinaire et l'utilisateur peut ouvrir immédiatement le couvercle 20.

En d'autres termes, selon cette variante le blocage du couvercle 20 en position verrouillée est systématique, et le déblocage est effectué soit immédiatement ou simultanément à l'arrêt de l'appareil de préparation culinaire si aucun risque de débordement n'est identifié, soit retardé si un risque de débordement est identifié (température prédéterminée dépassée et vitesse prédéterminée dépassée). Autrement dit, les moyens de sécurisation du verrouillage sont désactivés sous condition.

Selon une deuxième variante de ce procédé, on peut procéder au blocage du couvercle 20 en position verrouillée seulement si les deux conditions sont programmées (c'est-à-dire au démarrage de l'appareil de préparation culinaire, par exemple simultanément au démarrage du mouvement de l'organe mobile de travail ou même après, mais avant que la vitesse dépasse la vitesse prédéterminée et que la température dépasse la température prédéterminée), ou dès que ces deux conditions sont mesurées par l'appareil de préparation culinaire (en cours de programme). On peut alors maintenir les moyens de sécurisation du verrouillage activés pendant toute l'utilisation ultérieure de l'appareil de préparation culinaire, et pendant une temporisation de repos (au moins cinq secondes, et préférentiellement au moins huit ou dix secondes), après arrêt complet de l'organe mobile de travail et/ou du chauffage. Ainsi l'ouverture du couvercle 20 est impossible uniquement lorsqu'un risque de débordement existe.

En d'autres termes, selon cette variante, les moyens de sécurisation du verrouillage ne sont activés au démarrage ou pendant l'utilisation que s'il est prévu ou mesuré de dépasser la vitesse prédéterminée et la température prédéterminée au cours du cycle à venir, et le blocage est maintenu un court instant même après l'arrêt complet de l'appareil de préparation culinaire. On peut prévoir sur le panneau de commande 44 d'informer l'utilisateur si l'ouverture est possible ou non. Autrement dit, les moyens de sécurisation du verrouillage sont activés sous condition.

L'appareil de préparation culinaire comprend donc une unité de commande et des moyens de mesure ou d'acquisition de la température, et des moyens de mesure ou d'acquisition de la vitesse de l'organe mobile de travail 30.

On peut utiliser la température des moyens de chauffage, la température de la cuve 10, ou la température des aliments à préparer situés dans la cuve 10. La température prédéterminée peut être 50°C ou préférentiellement 60°C.

En ce qui concerne la vitesse de l'organe mobile de travail 30, on peut choisir de considérer qu'il faut activer les moyens de sécurisation du verrouillage (si la température prédéterminée est dépassée), dès qu'une gamme de vitesse est choisie ou mesurée (par exemple le dernier palier de plusieurs paliers de vitesse préprogrammés), ou dès que la vitesse choisie ou mesurée excède une valeur particulière, par exemple 160 tours/min ou plus préférentiellement 250 tours/min.

Ainsi en bloquant le couvercle 20 en position verrouillée pendant la temporisation de repos, après arrêt de l'agitation et du chauffage des aliments, dès que la vitesse excède la vitesse prédéterminée simultanément à un dépassement de la température prédéterminée, l'ouverture est impossible tant qu'il existe un risque de débordement et/ou ébullition intempestifs.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence à une portion d'engagement mâle de la tige, qui s'engage dans une forme femelle du couvercle 20, mais on peut prévoir une portion d'engagement femelle mobile de la tige, qui vient s'accoupler avec un index mâle du couvercle 20. L'organe de blocage 53 actionné par le motoréducteur 51 n'est pas nécessairement porté par la tige 52. L'organe de blocage 53 peut notamment être monté pivotant par rapport à la cuve 10 ou par rapport au boîtier 40. L'organe de blocage 53 peut être directement déplacé par le motoréducteur 51, ou par l'intermédiaire d'un dispositif de transmission. Si désiré, l'organe de blocage 53 peut être associé à un moyen de rappel élastique agencé pour ramener ledit organe de blocage 53 vers la première position, vers la deuxième position, ou vers une autre position.

## Revendications

1. Appareil de préparation culinaire comprenant :
- un boîtier (40),
- une cuve (10) montée sur le boîtier (40) et agencée pour recevoir des aliments à préparer,
- au moins un organe mobile de travail (30) disposé dans la cuve (10) et agencé pour travailler les aliments reçus dans la cuve (10),
- un moteur disposé dans le boîtier (40) et agencé pour mettre en mouvement l'organe mobile de travail (30),
- un couvercle (20) amovible conférant à la cuve (10) un état fermé dans lequel la cuve (10) est fermée par le couvercle (20),
- des moyens de verrouillage du couvercle (20) sur la cuve (10),
- le couvercle (20) étant agencé pour être déplacé lorsque la cuve (10) est dans son état fermé entre :
- une position déverrouillée sur la cuve (10), dans laquelle le couvercle (20) est dégagé des moyens de verrouillage, et
- une position verrouillée sur la cuve (10), dans laquelle le couvercle (20) coopère avec les moyens de verrouillage,
**caractérisé :**
**en ce que** l'appareil de préparation culinaire comprend des moyens de sécurisation du verrouillage du couvercle (20), lesdits moyens de sécurisation du verrouillage comportant :
- au moins un organe de blocage (53) mobile entre une première position dans laquelle le mouvement du couvercle (20) depuis la position verrouillée vers la position déverrouillée est autorisé, et une deuxième position dans laquelle l'organe de blocage (53) entrave le mouvement du couvercle (20) depuis la position verrouillée vers la position déverrouillée,
- un motoréducteur (51) pour déplacer l'organe de blocage (53) entre la première position et la deuxième position.

2. Appareil de préparation culinaire selon la revendication 1, **caractérisé en ce que** les moyens de verrouillage du couvercle (20) sur la cuve (10) sont du type à baïonnette.

3. Appareil de préparation culinaire selon l'une des revendications 1 ou 2, **caractérisé en ce que** le couvercle (20) est agencé pour être déplacé entre la position déverrouillée et la position verrouillée selon un mouvement de rotation par rapport à la cuve (10).

4. Appareil de préparation culinaire selon l'une des revendications 1 à 3, **caractérisé en ce que** la cuve (10) est montée amovible sur le boîtier (40) et **en ce que** le boîtier (40) comprend une surface d'appui agencée pour recevoir la cuve (10).

5. Appareil de préparation culinaire selon l'une des revendications 1 à 4, **caractérisé en ce que** la cuve (10) comporte une poignée (12) et **en ce que** l'organe de blocage (53) s'étend hors de la poignée (12) lorsque l'organe de blocage (53) occupe la deuxième position.

6. Appareil de préparation culinaire selon l'une des revendications 1 à 5, **caractérisé en ce que** l'organe de blocage (53) est porté par une tige (52) agencée pour être déplacée par le motoréducteur (51) selon un mouvement de translation entre la première position et la deuxième position, de préférence selon une liaison glissière.

7. Appareil de préparation culinaire selon la revendication 6, **caractérisé en ce que** le motoréducteur (51) est accouplé à la tige (52) pour déplacer l'organe de blocage (53) entre la première position et la deuxième position.

8. Appareil de préparation culinaire selon l'une des revendication 6 ou 7, **caractérisé en ce que** la tige (52) est portée par la cuve (10).

9. Appareil de préparation culinaire selon la revendication 8, **caractérisé en ce que** la tige (52) est associée à des moyens de rappel élastiques agencés pour déplacer la tige (52) vers la première position depuis la deuxième position.

10. Appareil de préparation culinaire selon l'une des revendications 8 ou 9 et selon la revendication 5, **caractérisé en ce que** la cuve (10) porte un capot latéral (11) s'étendant de la surface d'appui à une partie supérieure de la cuve (10) et **en ce que** la tige (52) est logée principalement entre la cuve (10) et le capot latéral (11).

11. Appareil de préparation culinaire selon l'une des revendications 1 à 10, **caractérisé en ce que** le motoréducteur (51) est agencé dans le boîtier (40), **en ce que** le motoréducteur (51) comprend un bras de commande (51a) et **en ce que** le bras de commande (51a) comprend au moins une butée de fin de course prévue pour venir en butée avec le boîtier (40) afin de définir la première position de l'organe de blocage (53) et/ou la deuxième position de l'organe de blocage (53).

12. Appareil de préparation culinaire selon l'une des revendications 1 à 11, **caractérisé en ce que** le motoréducteur (51) est agencé pour déplacer l'organe de blocage (53) de la deuxième position à la première position.

13. Appareil de préparation culinaire selon l'une des revendications 1 à 12, **caractérisé en ce qu'**il comprend des moyens de chauffage agencés pour fournir une chaleur de cuisson aux aliments reçus dans la cuve (10).

14. Appareil de préparation culinaire selon l'une des revendications 1 à 13, **caractérisé en ce que** le motoréducteur (51) est agencé dans le boîtier (40).

15. Procédé de commande d'un appareil de préparation culinaire comprenant :
- un boîtier (40),
- une cuve (10) montée sur le boîtier (40) et agencée pour recevoir des aliments à préparer,
- au moins un organe mobile de travail (30) disposé dans la cuve (10) et agencé pour travailler les aliments reçus dans la cuve (10),
- un moteur disposé dans le boîtier (40) et agencé pour mettre en mouvement l'organe mobile de travail (30) selon plusieurs vitesses de travail,
- un couvercle (20) amovible conférant à la cuve (10) un état fermé dans lequel la cuve (10) est fermée par le couvercle (20),
- des moyens de verrouillage du couvercle (20) sur la cuve (10),
- le couvercle (20) étant agencé pour être déplacé lorsque la cuve (10) est dans son état fermé entre :
- une position déverrouillée sur la cuve (10), dans laquelle le couvercle (20) est dégagé des moyens de verrouillage, et
- une position verrouillée sur la cuve (10), dans laquelle le couvercle (20) coopère avec les moyens de verrouillage,
- des moyens de chauffage agencés pour fournir une chaleur de cuisson aux aliments reçus dans la cuve (10),
- des moyens de sécurisation du verrouillage du couvercle (20) en position verrouillée,
le procédé de commande comprenant les étapes consistant à :
- actionner automatiquement les moyens de sécurisation du verrouillage lors d'un démarrage de l'appareil de préparation culinaire, de sorte à bloquer le couvercle (20) en position verrouillée,
- actionner les moyens de sécurisation du verrouillage de sorte à débloquer le couvercle (20) :
• simultanément à un arrêt de l'appareil de préparation culinaire, si une température mesurée de la cuve (10) ou des aliments à préparer est inférieure à une température prédéterminée ou si une température de consigne utilisée avant l'arrêt de l'appareil de préparation culinaire est inférieure à une température prédéterminée ou si la vitesse de travail utilisée avant l'arrêt de l'appareil de préparation culinaire est inférieure à une vitesse prédéterminée,
• à l'issue d'une temporisation de repos comptée à partir d'un arrêt de l'appareil de préparation culinaire, si une température de la cuve (10) ou des aliments à préparer est supérieure à la température prédéterminée, et si la vitesse de travail utilisée avant l'arrêt de l'appareil de préparation culinaire est supérieure à une vitesse prédéterminée.

16. Procédé de commande d'un appareil de préparation culinaire comprenant :
- un boîtier (40),
- une cuve (10) montée sur le boîtier (40) et agencée pour recevoir des aliments à préparer,
- au moins un organe mobile de travail (30) disposé dans la cuve (10) et agencé pour travailler les aliments reçus dans la cuve (10),
- un moteur disposé dans le boîtier (40) et agencé pour mettre en mouvement l'organe mobile de travail (30) selon plusieurs vitesses de travail,
- un couvercle (20) amovible conférant à la cuve (10) un état fermé dans lequel la cuve (10) est fermée par le couvercle (20),
- des moyens de verrouillage du couvercle (20) sur la cuve (10),
- le couvercle (20) étant agencé pour être déplacé lorsque la cuve (10) est dans son état fermé entre :
- une position déverrouillée sur la cuve (10), dans laquelle le couvercle (20) est dégagé des moyens de verrouillage, et
- une position verrouillée sur la cuve (10), dans laquelle le couvercle (20) coopère avec les moyens de verrouillage,
- des moyens de chauffage agencés pour fournir une chaleur de cuisson aux aliments reçus dans la cuve (10),
- des moyens de sécurisation du verrouillage du couvercle (20) en position verrouillée,
le procédé de commande comprenant les étapes consistant à :
- actionner de manière conditionnelle les moyens de sécurisation du verrouillage lors d'un démarrage de l'appareil de préparation culinaire, ou après le démarrage de l'appareil de préparation culinaire, de sorte à bloquer le couvercle (20) en position verrouillée, seulement si une température mesurée de la cuve (10) ou des aliments à préparer est supérieure à une température prédéterminée ou si une température de consigne utilisée avant l'arrêt de l'appareil de préparation culinaire est supérieure à une température prédéterminée, et si la vitesse de travail utilisée est supérieure à une vitesse prédéterminée,
- actionner les moyens de sécurisation du verrouillage de sorte à débloquer le couvercle (20) à l'issue d'une temporisation de repos comptée à partir d'un arrêt de l'appareil de préparation culinaire, si les moyens de sécurisation du verrouillage ont été précédemment actionnés de sorte à bloquer le couvercle (20) en position verrouillée.

17. Procédé de commande selon l'une des revendications 15 ou 16, **caractérisé en ce que** la durée de la temporisation de repos est supérieure ou égale à 5 secondes, et préférentiellement supérieure ou égale à 10 secondes.

18. Procédé de commande selon l'une des revendications 15 à 17, **caractérisé en ce que** la température prédéterminée est inférieure ou égale à 60°C et de préférence inférieure ou égale à 50°C, et **en ce que** la vitesse prédéterminée correspond à une vitesse de rotation de l'organe mobile de travail (30) inférieure ou égale à 250 tours/min, et de préférence inférieure ou égale à 160 tours/min.

## Patentansprüche

1. Gerät zur Zubereitung von Speisen, umfassend:
- ein Gehäuse (40),
- einen Behälter (10), der auf dem Gehäuse (40) angebracht und so eingerichtet ist, dass er Lebensmittel, die zubereitet werden sollen, aufnehmen kann,
- mindestens ein bewegliches Arbeitsorgan (30), das im Behälter (10) angeordnet und so eingerichtet ist, dass es die im Behälter (10) aufgenommenen Lebensmittel bearbeiten kann,
- einen Motor, der im Gehäuse (40) angeordnet und so eingerichtet ist, dass er das bewegliche Arbeitsorgan (30) in Bewegung setzen kann,
- einen abnehmbaren Deckel (20), der dem Behälter (10) einen geschlossenen Zustand verleiht, in dem der Behälter (10) vom Deckel (20) geschlossen wird,
- Mittel zum Verriegeln des Deckels (20) auf dem Behälter (10),
- wobei der Deckel (20) so eingerichtet ist, dass er, wenn sich der Behälter (10) in seinem geschlossenen Zustand befindet, bewegt werden kann zwischen:
- einer entriegelten Stellung auf dem Behälter (10), in der der Deckel (20) aus den Verriegelungsmitteln ausgerückt ist, und
- einer verriegelten Stellung auf dem Behälter (10), in der der Deckel (20) mit den Verriegelungsmitteln zusammenwirkt,
**dadurch gekennzeichnet, dass**:
das Gerät zur Zubereitung von Speisen Mittel zum Sichern der Verriegelung des Deckels (20) umfasst, wobei die Verriegelungssicherungsmittel umfassen:
- mindestens ein Sperrorgan (53), das zwischen einer ersten Stellung, in der die Bewegung des Deckels (20) aus der verriegelten Stellung in die entriegelte Stellung ermöglicht ist, und einer zweiten Stellung beweglich ist, in der das Sperrorgan (53) die Bewegung des Deckels (20) aus der verriegelten Stellung in die entriegelte Stellung behindert,
- einen Getriebemotor (51), um das Sperrorgan (53) zwischen der ersten Stellung und der zweiten Stellung zu bewegen.

2. Gerät zur Zubereitung von Speisen nach Anspruch 1, **dadurch gekennzeichnet, dass** die Mittel zum Verriegeln des Deckels (20) auf dem Behälter (10) vom Bajonett-Typ sind.

3. Gerät zur Zubereitung von Speisen nach einem der Ansprüche 1 oder 2, **dadurch gekennzeichnet, dass** der Deckel (20) so eingerichtet ist, dass er in einer Drehbewegung in Bezug auf den Behälter (10) zwischen der entriegelten Stellung und der verriegelten Stellung bewegt werden kann.

4. Gerät zur Zubereitung von Speisen nach einem der Ansprüche 1 bis 3, **dadurch gekennzeichnet, dass** der Behälter (10) abnehmbar auf dem Gehäuse (40) angebracht ist, und dadurch, dass das Gehäuse (40) eine Auflagefläche umfasst, die so eingerichtet ist, dass sie den Behälter (10) aufnehmen kann.

5. Gerät zur Zubereitung von Speisen nach einem der Ansprüche 1 bis 4, **dadurch gekennzeichnet, dass** der Behälter (10) einen Griff (12) umfasst, und dadurch, dass sich das Sperrorgan (53) außerhalb des Griffs (12) erstreckt, wenn das Sperrorgan (53) die zweite Stellung einnimmt.

6. Gerät zur Zubereitung von Speisen nach einem der Ansprüche 1 bis 5, **dadurch gekennzeichnet, dass** das Sperrorgan (53) von einer Stange (52) getragen wird, die so eingerichtet ist, dass sie vom Getriebemotor (51) in einer Verschiebebewegung, vorzugsweise in einer Gleitverbindung, zwischen der ersten Stellung und der zweiten Stellung bewegt werden kann.

7. Gerät zur Zubereitung von Speisen nach Anspruch 6, **dadurch gekennzeichnet, dass** der Getriebemotor (51) mit der Stange (52) gekoppelt ist, um das Sperrorgan (53) zwischen der ersten Stellung und der zweiten Stellung zu bewegen.

8. Gerät zur Zubereitung von Speisen nach einem aus Anspruch 6 oder 7, **dadurch gekennzeichnet, dass** die Stange (52) vom Behälter (10) getragen wird.

9. Gerät zur Zubereitung von Speisen nach Anspruch 8, **dadurch gekennzeichnet, dass** die Stange (52) mit elastischen Rückstellmitteln verknüpft ist, die so eingerichtet sind, dass sie die Stange (52) aus der zweiten Stellung in die erste Stellung bewegen können.

10. Gerät zur Zubereitung von Speisen nach einem der Ansprüche 8 oder 9 und nach Anspruch 5, **dadurch gekennzeichnet, dass** der Behälter (10) eine Seitenabdeckung (11) trägt, die sich von der Auflagefläche zu einem oberen Teil des Behälters (10) erstreckt, und dadurch, dass die Stange (52) im Wesentlichen zwischen dem Behälter (10) und der Seitenabdeckung (11) untergebracht ist.

11. Gerät zur Zubereitung von Speisen nach einem der Ansprüche 1 bis 10, **dadurch gekennzeichnet, dass** der Getriebemotor (51) im Gehäuse (40) eingerichtet ist, dadurch, dass der Getriebemotor (51) einen Steuerarm (51a) umfasst, und dadurch, dass der Steuerarm (51a) mindestens einen Endanschlag umfasst, der so vorgesehen ist, dass er mit dem Gehäuse (40) in Anschlag gehen kann, um die erste Stellung des Sperrorgans (53) und/oder die zweite Stellung des Sperrorgans (53) zu definieren.

12. Gerät zur Zubereitung von Speisen nach einem der Ansprüche 1 bis 11, **dadurch gekennzeichnet, dass** der Getriebemotor (51) so eingerichtet ist, dass er das Sperrorgan (53) aus der zweiten Stellung in die erste Stellung bewegen kann.

13. Gerät zur Zubereitung von Speisen nach einem der Ansprüche 1 bis 12, **dadurch gekennzeichnet, dass** es Heizmittel umfasst, die so eingerichtet sind, dass sie eine Kochhitze an die im Behälter (10) aufgenommenen Lebensmittel liefern können.

14. Gerät zur Zubereitung von Speisen nach einem der Ansprüche 1 bis 13, **dadurch gekennzeichnet, dass** der Getriebemotor (51) im Gehäuse (40) eingerichtet ist.

15. Verfahren zur Steuerung eines Geräts zur Zubereitung von Speisen, welches umfasst:
- ein Gehäuse (40),
- einen Behälter (10), der auf dem Gehäuse (40) angebracht und so eingerichtet ist, dass er Lebensmittel, die zubereitet werden sollen, aufnehmen kann,
- mindestens ein bewegliches Arbeitsorgan (30), das im Behälter (10) angeordnet und so eingerichtet ist, dass es die im Behälter (10) aufgenommenen Lebensmittel bearbeiten kann,
- einen Motor, der im Gehäuse (40) angeordnet und so eingerichtet ist, dass er das bewegliche Arbeitsorgan (30) in mehreren Arbeitsgeschwindigkeiten in Bewegung setzen kann,
- einen abnehmbaren Deckel (20), der dem Behälter (10) einen geschlossenen Zustand verleiht, in dem der Behälter (10) vom Deckel (20) geschlossen wird,
- Mittel zum Verriegeln des Deckels (20) auf dem Behälter (10),
- wobei der Deckel (20) so eingerichtet ist, dass er, wenn sich der Behälter (10) in seinem geschlossenen Zustand befindet, bewegt werden kann zwischen:
- einer entriegelten Stellung auf dem Behälter (10), in der der Deckel (20) aus den Verriegelungsmitteln ausgerückt ist, und
- einer verriegelten Stellung auf dem Behälter (10), in der der Deckel (20) mit den Verriegelungsmitteln zusammenwirkt,
- Heizmittel, die so eingerichtet sind, dass sie eine Kochhitze an die im Behälter (10) aufgenommenen Lebensmittel liefern können,
- Mittel zum Sichern der Verriegelung des Deckels (20) in der verriegelten Stellung,
wobei das Steuerverfahren die Schritte umfasst des:
- automatischen Betätigens der Verriegelungssicherungsmittel bei einem Anlaufen des Geräts zur Zubereitung von Speisen, um den Deckel (20) in der verriegelten Stellung zu sperren,
- Betätigens der Verriegelungssicherungsmittel, um den Deckel (20) zu entsperren:
• gleichzeitig mit einem Stoppen des Geräts zur Zubereitung von Speisen, wenn eine gemessene Temperatur des Behälters (10) oder der zuzubereitenden Lebensmittel niedriger ist als eine vorbestimmte Temperatur, oder wenn eine Solltemperatur, die vor dem Stoppen des Geräts zur Zubereitung von Speisen verwendet wird, niedriger ist als eine vorbestimmte Temperatur, oder wenn die Arbeitsgeschwindigkeit, die vor dem Stoppen des Geräts zur Zubereitung von Speisen verwendet wird, niedriger ist als eine vorbestimmte Geschwindigkeit,
• am Ende einer Ruheverzögerung, die ab einem Stoppen des Geräts zur Zubereitung von Speisen gezählt wird, wenn eine Temperatur des Behälters (10) oder der zuzubereitenden Lebensmittel höher ist als die vorbestimmte Temperatur, und wenn die Arbeitsgeschwindigkeit, die vor dem Stoppen des Geräts zur Zubereitung von Speisen verwendet wird, höher ist als eine vorbestimmte Geschwindigkeit.

16. Verfahren zur Steuerung eines Geräts zur Zubereitung von Speisen, welches umfasst:
- ein Gehäuse (40),
- einen Behälter (10), der auf dem Gehäuse (40) angebracht und so eingerichtet ist, dass er Lebensmittel, die zubereitet werden sollen, aufnehmen kann,
- mindestens ein bewegliches Arbeitsorgan (30), das im Behälter (10) angeordnet und so eingerichtet ist, dass es die im Behälter (10) aufgenommenen Lebensmittel bearbeiten kann,
- einen Motor, der im Gehäuse (40) angeordnet und so eingerichtet ist, dass er das bewegliche Arbeitsorgan (30) in mehreren Arbeitsgeschwindigkeiten in Bewegung setzen kann,
- einen abnehmbaren Deckel (20), der dem Behälter (10) einen geschlossenen Zustand verleiht, in dem der Behälter (10) vom Deckel (20) geschlossen wird,
- Mittel zum Verriegeln des Deckels (20) auf dem Behälter (10),
- wobei der Deckel (20) so eingerichtet ist, dass er, wenn sich der Behälter (10) in seinem geschlossenen Zustand befindet, bewegt werden kann zwischen:
- einer entriegelten Stellung auf dem Behälter (10), in der der Deckel (20) aus den Verriegelungsmitteln ausgerückt ist, und
- einer verriegelten Stellung auf dem Behälter (10), in der der Deckel (20) mit den Verriegelungsmitteln zusammenwirkt,
- Heizmittel, die so eingerichtet sind, dass sie eine Kochhitze an die im Behälter (10) aufgenommenen Lebensmittel liefern können,
- Mittel zum Sichern der Verriegelung des Deckels (20) in der verriegelten Stellung,
wobei das Steuerverfahren die Schritte umfasst des:
- bedingten Betätigens der Verriegelungssicherungsmittel bei einem Anlaufen des Geräts zur Zubereitung von Speisen oder nach dem Anlaufen des Geräts zur Zubereitung von Speisen, um den Deckel (20) nur dann in der verriegelten Stellung zu sperren, wenn eine gemessene Temperatur des Behälters (10) oder der zuzubereitenden Lebensmittel höher ist als eine vorbestimmte Temperatur, oder wenn eine Solltemperatur, die vor dem Stoppen des Geräts zur Zubereitung von Speisen verwendet wird, höher ist als eine vorbestimmte Temperatur, und wenn die verwendete Arbeitsgeschwindigkeit höher ist als eine vorbestimmte Geschwindigkeit,
- Betätigens der Verriegelungssicherungsmittel, um den Deckel (20) am Ende einer Ruheverzögerung, die ab einem Stoppen des Geräts zur Zubereitung von Speisen gezählt wird, zu entsperren, wenn die Verriegelungssicherungsmittel zuvor betätigt wurden, um den Deckel (20) in der verriegelten Stellung zu sperren.

17. Steuerverfahren nach einem der Ansprüche 15 oder 16, **dadurch gekennzeichnet, dass** die Dauer der Ruheverzögerung größer oder gleich 5 Sekunden, und vorzugsweise größer oder gleich 10 Sekunden ist.

18. Steuerverfahren nach einem der Ansprüche 15 bis 17, **dadurch gekennzeichnet, dass** die vorbestimmte Temperatur kleiner oder gleich 60 °C und vorzugsweise kleiner oder gleich 50 °C ist, und dadurch, dass die vorbestimmte Geschwindigkeit einer Drehzahl des beweglichen Arbeitsorgans (30) von kleiner oder gleich 250 Umdrehungen/Minute, und vorzugsweise kleiner oder gleich 160 Umdrehungen/Minute entspricht.

## Claims

1. Food-preparation device comprising:
- a case (40),
- a container (10) mounted on the case (40) and arranged to receive food to be prepared,
- at least one movable working member (30) disposed in the container (10) and arranged to work on the food received in the container (10),
- a motor disposed in the case (40) and arranged to move the movable working member (30),
- a removable lid (20) that provides the container (10) with a closed state wherein the container (10) is closed by the lid (20),
- means for locking the lid (20) on the container (10),
- the lid (20) being arranged to be moved when the container (10) is in its closed state between:
- an unlocked position on the container (10), wherein the lid (20) is cleared of the means for locking, and
- a locked position on the container (10), wherein the lid (20) cooperates with the means for locking,
**characterised:**
**in that** the food-preparation device comprises means for securing the locking of the lid (20), said means for securing the locking comprising:
- at least one locking member (53) mobile between a first position wherein the movement of the lid (20) from the locked position to the unlocked position is authorised, and a second position wherein the locking member (53) prevents the lid (20) from moving from the locked position to the unlocked position,
- a gear motor (51) to move the locking member (53) between the first position and the second position.

2. Food-preparation device according to claim 1, **characterised in that** the means for locking the lid (20) on the container (10) are of the bayonet type.

3. Food-preparation device according to one of claims 1 or 2, **characterised in that** the lid (20) is arranged to be moved between the unlocked position and the locked position according to a rotation movement with respect to the container (10).

4. Food-preparation device according to one of claims 1 to 3, **characterised in that** the container (10) is removably mounted on the case (40) and **in that** the case (40) comprises a bearing surface arranged to receive the container (10).

5. Food-preparation device according to one of claims 1 to 4, **characterised in that** the container (10) comprises a handle (12) and **in that** the locking member (53) extends beyond the handle (12) when the locking member (53) occupies the second position.

6. Food-preparation device according to one of claims 1 to 5, **characterised in that** the locking member (53) is carried by a rod (52) arranged to be moved by the gear motor (51) according to a translation movement between the first position and the second position, preferable according to a slide connection.

7. Food-preparation device according to claim 6, **characterised in that** the gear motor (51) is coupled to the rod (52) to move the locking member (53) between the first position and the second position.

8. Food-preparation device according to one of claims 6 or 7, **characterised in that** the rod (52) is carried by the container (10).

9. Food-preparation device according to claim 8, **characterised in that** the rod (52) is associated with means of elastic return arranged to move the rod (52) to the first position from the second position.

10. Food-preparation device according to one of claims 8 or 9 and according to claim 5, **characterised in that** the container (10) carries a lateral cover (11) that extends from the bearing surface to an upper portion of the container (10) and **in that** the rod (52) is housed mainly between the container (10) and the lateral cover (11).

11. Food-preparation device according to one of claims 1 to 10, **characterised in that** the gear motor (51) is arranged in the case (40), **in that** the gear motor (51) comprises a control arm (51a) and **in that** the control arm (51a) comprises at least one end-of-travel abutment provided to abut against the case (40) in order to define the first position of the locking member (53) and/or the second position of the locking member (53).

12. Food-preparation device according to one of claims 1 to 11, **characterised in that** the gear motor (51) is arranged to move the locking member (53) from the second position to the first position.

13. Food-preparation device according to one of claims 1 to 12, **characterised in that** it comprises means for heating arranged to provide a cooking heat to the food received in the container (10).

14. Food-preparation device according to one of claims 1 to 13, **characterised in that** the gear motor (51) is arranged in the case (40).

15. Method for controlling a food-preparation device comprising:
- a case (40),
- a container (10) mounted on the case (40) and arranged to receive food to be prepared,
- at least one movable working member (30) disposed in the container (10) and arranged to work on the food received in the container (10),
- a motor disposed in the case (40) and arranged to move the movable working member (30) according to several working speeds,
- a removable lid (20) that provides the container (10) with a closed state wherein the container (10) is closed by the lid (20),
- means for locking the lid (20) on the container (10),
- the lid (20) being arranged to be moved when the container (10) is in its closed state between:
- an unlocked position on the container (10), wherein the lid (20) is cleared of the means for locking, and
- a locked position on the container (10), wherein the lid (20) cooperates with the means for locking,
- means for heating arranged to provide a cooking heat to the food received in the container (10),
- means for securing the locking of the lid (20) in the locked position,
the method for controlling comprising the steps consisting of:
- automatically actuating the means for securing the locking during a starting of the food-preparation device, in such a way as to lock the lid (20) in the locked position,
- actuating the means for securing the locking in such a way as to unlock the lid (20):
• simultaneously with a stopping of the food-preparation device, if a measured temperature of the container (10) or of the food to be prepared is less than a predetermined temperature or if a setpoint temperature used before the stopping of the food-preparation device is less than a predetermined temperature or if the working speed used before the stopping of the food-preparation device is less than a predetermined speed,
• at the end of a delay for resting counted from a stopping of the food-preparation device, if a temperature of the container (10) or of the food to be prepared is greater than the predetermined temperature, and if the working speed used before the stopping of the food-preparation device is greater than a predetermined speed.

16. Method for controlling a food-preparation device comprising:
- a case (40),
- a container (10) mounted on the case (40) and arranged to receive food to be prepared,
- at least one movable working member (30) disposed in the container (10) and arranged to work on the food received in the container (10),
- a motor disposed in the case (40) and arranged to move the movable working member (30) according to several working speeds,
- a removable lid (20) that provides the container (10) with a closed state wherein the container (10) is closed by the lid (20),
- means for locking the lid (20) on the container (10),
- the lid (20) being arranged to be moved when the container (10) is in its closed state between:
- an unlocked position on the container (10), wherein the lid (20) is cleared of the means for locking, and
- a locked position on the container (10), wherein the lid (20) cooperates with the means for locking,
- means for heating arranged to provide a cooking heat to the food received in the container (10),
- means for securing the locking of the lid (20) in the locked position,
the method for controlling comprising the steps consisting of:
- conditionally actuating the means for securing the locking during a starting of the food-preparation device, or after the starting of the food-preparation device, in such a way as to lock the lid (20) in the locked position, only if a measured temperature of the container (10) or of the food to be prepared is greater than a predetermined temperature or if a setpoint temperature used before the stopping of the food-preparation device is greater than a predetermined temperature, and if the working speed used is greater than a predetermined speed,
- actuating the means for securing the locking in such a way as to unlock the lid (20) at the end of a delay for resting counted from a stopping of the food-preparation device, if the means for securing the locking were previously actuated in such a way as to lock the lid (20) in the locked position.

17. Method for controlling according to one of claims 15 or 16, **characterised in that** the duration of the delay for resting is greater than or equal to 5 seconds, and preferably greater than or equal to 10 seconds.

18. Method for controlling according to one of claims 15 to 17, **characterised in that** the predetermined temperature is less than or equal to 60°C and preferably less than or equal to 50°C, and **in that** the predetermined speed corresponds to a rotating speed of the movable working member (30) less than or equal to 250 rpm, and preferably less than or equal to 160 rpm.
